# EUROPÄISCHE PATENTANMELDUNG

(11) **EP 1 168 188 A2**
(43) Veröffentlichungstag der Anmeldung: **02.01.2002**
(21) Anmeldenummer: 01113779.1
(22) Anmeldetag: 06.06.2001
(51) Int. Cl.: G06F 13/38

(54) **Interface einer Sonnenschutz- und/oder Verdunklungssystem-Antriebsvorrichtung**

(30) Priorität: 30.06.2000 DE 10031890
(71) Anmelder: JOSEF STEHLE & SÖHNE GMBH, 71773 Aichwald (DE)
(72) Erfinder: Prager, Reinhard, 72108 Rottenburg (DE)
(74) Vertreter: KOHLER SCHMID + PARTNER

(57) **Zusammenfassung**

Ein Interface einer Sonnenschutz- und/oder Verdunklungssystem-Antriebsvorrichtung ist zur seriellen Datenkommunikation zwischen der Antriebsvorrichtung und externen Steuer- und/oder Konfigurationseinheiten vorgesehen, wobei das Interface Einrichtungen zur Datenkommunkation über ein 7-Byte-Telegramm aufweist. Die Ansteuerung und der Betrieb der Antriebsvorrichtung wurden weiter verbessert.

## Beschreibung

### Stand der Technik

Die Erfindung betrifft eine Sonnenschutz- und/oder Verdunklungssystem-Antriebsvorrichtung. Derzeit werden Antriebsvorrichtungen konventionell über 230 V- Schalter gesteuert.

### Aufgabe der Erfindung

Der Erfindung liegt die Aufgabe zugrunde, die Ansteuerung und den Betrieb der Antriebsvorrichtung weiter zu verbessern.

### Gegenstand und Vorteile der Erfindung

Diese Aufgabe wird durch ein Interface gemäß Patentanspruch 1 und ein Verfahren gemäß Patentanspruch 5 gelöst. Sinnvolle Weiterbildungen der Erfindung sind in den Unteransprüchen enthalten. Das Interface stellt eine Schnittstelle zur Steuerung und Kommunikation zwischen intelligenten Antriebsvorrichtungen (Raffstoreantrieb, Rohrmotor etc.) und beliebigen externen Steuerkomponenten wie PC, Laptop, LON- Steuerung, EIB- Steuerung usw. dar. Das serielle Interface zur Datenkommunikation ist gekennzeichnet durch eine serielle, asynchrone Datenkommunikation über ein 7- Byte- Telegramm mit wahlweise Baudraten zwischen 1200- 9600 Baud zur Steuerung, Parameterkonfiguration und Statusrückmeldung intelligenter Antriebsvorrichtungen. Der Telegrammaufbau basiert auf 7 x 8 Datenbits ohne Parität und einem Stopbit, wobei das erste Datenbyte durch die Länge der Parameterbytes (High-Nibbel) und einen Kommandobefehl (Low-Nibbel) charakterisiert ist. Zur definierten Konfigurierung von Befehlen und Kommandos sind ein Adressierbyte und wahlweise 0 - 4 Parametrierbytes vorgesehen. Das 7. Byte enthält zur Gewährleistung der Datensicherheit eine Prüfsumme aus einer Modulo256- Operation ( Prüfsummenwert immer auf 0 abgeglichen).

Der Telegrammaufbau führt zu folgenden Vorteilen: Definierte direkte Operationsbefehle; indirekte und parametrierbare Operationen; parametrierbare Positionskommandos; parametrierbare Konfigurationsbefehle; Motorstatusbefehle, die in Auslegung und Varianz beliebig änderbar bzw. erweiterter sind.

Es wird eine Response der Datenkommunikation nach definierter und einstellbarer Responsetime zur Empfangsbestätigung bzw. Übertragung angeforderter Parameter mit Prüfsummenbildung im letzten Byte zur Sicherung der Datengültigkeit erreicht.

Es besteht die Integrationsmöglichkeit interner Kommunikationsmodule ( LON, EIB, etc.) mit RS232-Kompatibilität über wahlweise 5VDC- SIC-Kommunikationsinterface.

Eine externe Anpassung der seriellen Datenkommunikation über ein geeignetes Strommodulations-Koppelnetzwerk (Motoradapter) mit einer galvanischen Entkopplung zur 230VAC-Motorschnittstelle ist möglich.

### Zeichnung

Ein Ausführungsbeispiel des erfindungsgemäßen Interface einer Sonnenschutz-und/oder Verdunklungssystem-Antriebsvorrichtung ist in der schematischen Zeichnung dargestellt und wird in der nachfolgenden Beschreibung erläutert.

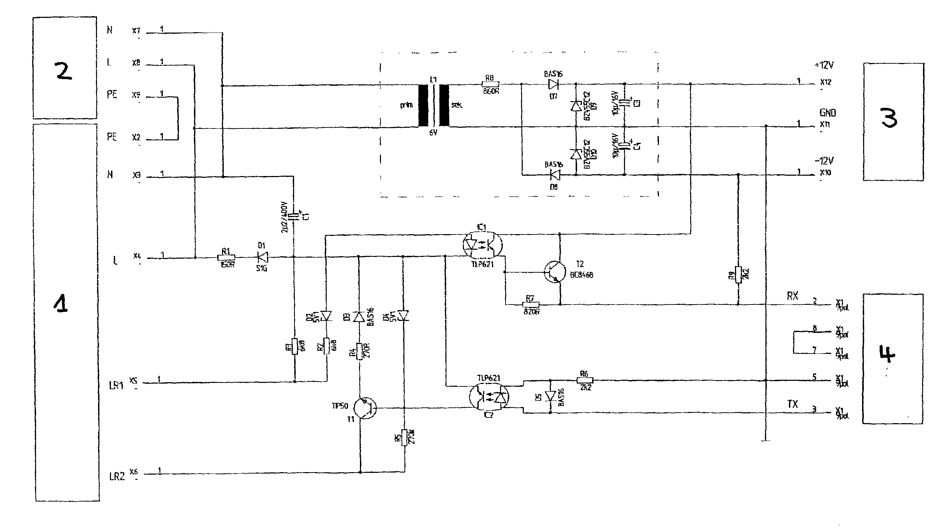

Die Figur zeigt die elektronische Schaltung des Interface.

### Beschreibung des Ausführungsbeispiels

Aus der Figur ist der Aufbau einer RS232- Interfaceschaltung als Motoradapter für eine Sonnenschutz- und/oder Verdunklungssystem-Antriebsvorrichtung ersichtlich. Das erfindungsgemäße serielle Interface basiert auf einer Strommodulationsanpassung mit galvanischer Kopplung. Signale werden zur Antriebsvorrichtung 1 über einen 4 mA- Pegel und eine Spannungshubbegrenzung auf < 200 V übertragen, um einen hohen Störspannungsabstand und eine ausreichende EMI- Festigkeit zu gewährleisten. Wahlweise kann die Spannungsversorgung 2 der Antriebsvorrichtung 1 oder eine externe Stromversorgung 3 genutzt werden. Ein 9-poliger Anschluss 4 ermöglicht die Verbindung der Antriebsvorrichtung 1 mit einer Steuereinheit, wie beispielsweise einem Computer, einer Sensoreinheit usw. Die Schaltung beinhaltet eine automatische Erkennungsroutine der seriellen Datenkommunikation durch die intelligente Antriebsvorrichtung 1 bei Anschluß des Interface (wahlweise Nutzung der Antriebe über konventionelle Steuerung oder das Interface möglich ). Über die Steuerleitungen der Antriebsvorrichtung 1, die alternativ mit automatischer Umschaltung als Steuereingänge für das manuelle Hoch- und Tieffahren genutzt werden, ist eine serielle Datenkommunikation möglich.

Das serielle Interface kommuniziert über ein 7 Byte- Telegramm mit RS232-Kompatibilität, wobei eine Pegelumsetzung zu den netzspannungsfesten Sende-und Empfangseingang erforderlich ist. Durch eine interruptgesteuerte Datenkommunikation und eine serielle Übertragungsrate von 1200 Baud ist eine Datenübertragung bis zu 50 m störungsfrei gewährleistet.

Die im Master-Slave-Verfahren arbeitende Kommunikation beinhaltet innerhalb einer Response von 20 ms eine Bestätigung des Sendetelegramms und nach einem definierten Längenbyte eine Ausgabe abgerufener Parameter.

Der Interfaceaufbau ist gekennzeichnet durch eine serielle, asynchrone Datenübertragung mit einer Konfiguration von 8 Datenbits, no parity, und 1 Stopbit.

Ein Sendestring weist folgenden Telegrammaufbau auf:

| | | | | | | |
|---|---|---|---|---|---|---|
| Kommand o-Byte | Adress-Byte | Param. - B Byte | Param. 1- Byte | Param. 2- Byte | Param. 3- Byte | Prüfsumme |

Der Sendestring besteht grundsätzlich aus 7 Bytes, fehlende Parameterbytes werden genullt. Das Kommandobyte wird gebildet durch: High-Nibbel = Länge der Parameterbytes ( 0- 4) und Low- Nibbel = Kommandobefehl. Die Parameterbytes werden gebildet (abhängig von der Länge): Param0 = LSB und Param3 = MSB. Die Checksum wird für Gültigkeitsprüfung über Modulo256 (100h - Summe aller Bytes) bestimmt.

Ein Empfangsstring weist folgenden Telegrammaufbau auf:

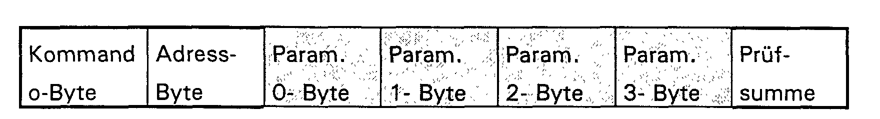

Das vom Slave zurückgesendete Telegramm wird in der Länge durch das Längenbyte bestimmt, die Parameterbytes Param.0 - Param.3 werden nur gesendet, wenn das Längenbyte > 0 definiert ist. Für Kommandonibbel 01 erfolgt die Rücksendung der gesendeten Adresse. Im Falle eines ungültigen Empfangs des Sendestrings wird als Prüfsumme ein NACK (21h) ausgegeben. Die Checksum wird für Gültigkeitsprüfung als Summe aller Bytes bestimmt.

Actionsbefehle werden direkt ausgeführt, eine vorhandene Buffer- Message wird gelöscht. Beispielhafte Befehle sind:

| | | |
|---|---|---|
| 01 | 00 | Buffer (Löschung von Buffer- Messages und Rücksetzung eines gesetzten Sperrflags aus einem Prioritätsereignis zur Neuaktivierung von Fahroperationen. |
| | | |
| 01 | 01 | Stop (Jede Bewegung wird unmittelbar unterbrochen, der Activmodus wird abgeschaltet). |
| | | |
| 01 | 02 | Hochfahren R1 (Aktivierung des Motorlaufs in Richtung 1 (Hoch), bis Endlage Oben erreicht ist. Der Motorlauf wird über die Slow-Fast-Rampenfahrweise ausgeführt. |
| | | |
| 01 | 03 | Prioitäts-Hochfahren R1 (Aktivierung des Motorlaufs in Richtung 1 (Hoch), bis Endlage Oben erreicht ist. Der Motorlauf wird sofort mit maximaler Geschwindigkeit ohne Slowmotion ausgeführt. Jede weitere Aktivierung von Fahrbefehlen wird durch das Prioritäts-Sperrflag bis zu dessen Löschung unterbrochen. |
| | | |
| 01 | 07 | Tieffahren R 2 (Aktivierung des Motorlaufes in Richtung 2 (Tief ), bis Endlage Unten erreicht ist. Der Motorlauf wird über die Slow- Fast- Rampenfahrweise ausgeführt. |
| | | |
| 01 | 06 | Prioritäts- Tieffahren R2 (Aktivierung des Motorlaufs in Richtung 2 ( Tief ), bis Endlage Unten erreicht ist. Der Motorlauf wird sofort mit maximaler Geschwindigkeit ohne Slow motion ausgeführt. Jede weitere Aktivierung von Fahrbefehlen wird durch das Prioritäts-Sperrflag bis zu dessen Löschung unterbrochen. |
| | | |
| 01 | 0Bh | Arbeitsstellung Down1 (Aktivierung des Motorlaufes zur Arbeitsstellung Down1, bis die Arbeitstposition erreicht ist. Der Motorlauf wird über die Slow- Fast- Rampenfahrweise ausgeführt. |

Parametrierte Fahrbefehle werden grundsätzlich in einen Befehlsbuffer übergeben und nur aus einem Stop- Zustand heraus ausgeführt. Parametrierte Fahrbefehle während eines aktiven Motorlaufes werden zwischengespeichert und nach Abschluß der laufenden Aktion nachgeholt. Eine vorhandene Buffermessage wird von einem neuen Bufferbefehl überschrieben. Beispielhafte Befehle sind:

| | | |
|---|---|---|
| 41 | 96h | K_SB ( Sollposition absolut ) (Motor fährt die unter Parameter angegebene Sollposition als absolute Position an. Der Motorlauf wird über die Slow- Fast- Rampenfahrweise ausgeführt. |
| | | |
| 11 | A8h | K_SBP (Sollposition prozentual ) (Motor fährt die unter Parameter0 angegebene prozentuale Sollposition zwischen den Endpositionen Oben- Unten in 0,5%- Schritten an. Der Motorlauf wird über die Slow- Fast- Rampenfahrweise ausgeführt. |
| | | |
| 41 | 99h | K_SLR1 ( Slow motion R1) (Aktivierung einer mit Slow motion definierten langsamen Motorbewegung in Richtung 1 ( Hoch ) um die unter Parameter 0-3 vorgegebene Wegstrecke als Relativposition ( 1600 Incremente pro Motorumdrehung ). |
| | | |
| 41 | 9Ah | K_SLR2 ( Slow motion R2 ) (Aktivierung einer mit Slow motion definierten langsamen Motorbewegung in Richtung 2 ( Tief ) um die unter Parameter 0-3 vorgegebene Wegstrecke als Relativposition ( 1600 Incremente pro Motorumdrehung ). |
| | | |
| 41 | 9Bh | K_FAR1 ( Fast motion R1) (Aktivierung einer Motorbewegung in Richtung 1 ( Hoch ) ohne Slow-Fast-Rampenfahrweise um die unter Parameter 0-3 vorgegebene Wegstrecke als Relativposition ( 1600 Incremente pro Motorumdrehung ). |
| | | |
| 41 | 9Ch | K_FAR2 ( Fast motion R2 ) (Aktivierung einer Motorbewegung in Richtung 2 ( Tief ) ohne Slow-Fast-Rampenfahrweise um die unter Parameter 0-3 vorgegebene Wegstrecke als Relativposition ( 1600 Incremente pro Motorumdrehung ). |
| | | |
| 21 | A9h | K_SLGA ( absoluter Lammellenwinkel ) (Motor fährt in Slow motion auf den mit Parameter0-1 definierten Lammellenwinkel in 1/10° ( 0 = waagerecht ); Lammellenwendebereich wird mit dem Parameter MaxLAM je nach Store-System konfiguriert. |
| | | |
| 21 | AAh | K_SLGR1 ( relativer Lammellenwinkel in R 1) (Motor fährt mit Slow motion in Richtung 1 um die mit Parameter0-1 definierten Lammellenwinkelgrade in 1/10° - Auflösung, der Lammellenwinkel wird mit MaxLAM begrenzt. Mit Negativvorzeichen erfolgt eine Lammellenbewegung in Richtung R 2. |
| | | |
| 21 | ABh | K_SLGR2 ( relativer Lammellenwinkel in R 2) (Motor fährt mit Slow motion in Richtung 2 um die mit Parameter0-1 definierten Lammellenwinkelgrade in 1/10° - Auflösung, der Lammellenwinkel wird mit MaxLAM begrenzt. Mit Negativvorzeichen erfolgt eine Lammellenbewegung in Richtung R 1. |
| | | |
| 11 | ADh | K_FAP ( Fast motion prozentual ) (Motor fährt nur mit Fast motion die in Param= angegebene Position in 0,5%-Schrittweite an ( kein Langsamanlauf / kein Langsamauslauf) |

Positionsbefehle dienen zur Vorgabe und Abfrage von Funktionspositionen, Positionskorrekturen und Positionsabständen. Die Übergabe von neuen Funktionsdaten erfolgt über den Kommandonibbel X =2, das Abfragen der Daten erfolgt über den Kommandonibbel X = 3. Beispielhafte Befehle sind:

| | | |
|---|---|---|
| 4X | 00 | ENDPOS (Impulsanzahl für Endposition Oben (Referenzposition oder programmierte wählbare Endposition ) |
| | | |
| 4X | 04 | ENDPOS2 (Impulsanzahl für Endposition Unten (Down2)) |
| | | |
| 4X | 08 | ZPOS (Impulsanzahl für Arbeitsstellung Down1) |
| | | |
| 1X | 10h | IOFFS1 (Impulsanzahl für Impulsfenster aus Stop in Richtung 1 ( systemabhängiger Impulsnachlauf 0- 255 Impulse )) |
| | | |
| 1X | 11h | IOFFS2 (Impulsanzahl für Impulsfenster aus Stop in Richtung 2 ( systemabhängiger Impulsnachlauf 0- 255 Impulse ) |
| | | |
| 2X | 12h | AOFFS1 (Impulsanzahl der konfigurierbaren Freifahrt nach Referenzereignis in der Position Oben ( Revers- Gegenrichtung zur Endposition Oben) ) |
| | | |
| 2X | 14h | AOFFS2 (Impulsanzahl der konfigurierbaren Freifahrt nach Referenzereignis in der Position Tief ( Revers- Gegenrichtung zur Endposition Tief) nur R 3;) |
| | | |
| 2X | 16h | MaxLAM (Impulsanzahl für maximalen Lammellenwendewinkel; Die Impulsdifferenz zwischen minimalen Winkel nach Tieffahren und maximalen Winkel nach Hochfahren dient zur Berechnung des Wendewinkels.) |

Die Konfigurationsbefehle dienen zur Einstellung verschiedener Fixparameter und änderbarer Funktions- Steuerungswerte. Beispielhafte Befehle sind:

| | | |
|---|---|---|
| 1X | 18h | CONF ( Steuerungskonfiguration ) Bitmuster zur Konfigurierung der Funktionsparameter der Motorsteuerung Bit 0x01 keine Freifahrt nach Referenzereignis Bit 0x02 frei Bit 0x04 Motorausgänge sperren Bit 0x08 Selbsthaltung nach Tastendelay invertiert Bit 0x10 Freischaltung Encoderausfall Bit 0x20 Aufhebung der Priorität der Ortsbedienung Bit 0x40 Umkehr der Laufrichtung R1 und R2 (Toggelprinzip) Bit 0x80 frei |
| | | |
| 2X | 19h | DATE ( Datum ) Fertigungs- bzw. Inbetriebnahmedatum im Format MM:JJ |
| | | |
| 12 | 1Bh | CYCLEACT (Zyklencounter automatische Referenzfahrt) Aktueller Zyklenstand zwischen 255 - 0 zur Aktivierung einer autom. Referenzfahrt bei Ereigniseintritt = 0; Der nächstfolgende Fahrbefehl wird als Referenzfahrt ausgeführt, wenn vorher die Endposition über eine Selbstjustierung erfolgte. |
| | | |
| 1 X | 1 Ch | CYCLEMAX ( Vorgabewert für Zyklencounter ) Anzahl der Fahroperationen zur Endposition Oben; Jedes Ereignis Endposition Oben decrementiert den mit Cyclemax vorbelegten Cyclecounter CYCLEACT für eine Aktivierung des nächsten Referenzfahrtereignisses. |
| | | |
| 12 | 1Dh | REFRUN ( Referenzereignis ) Bitmuster-Statusbyte für Endpositionen und Referenzfreigabe; Bit 0x01 = Referenzfreigabe für Richtung 1 Bit 0x02= Referenzfreigabe für Richtung 2 ( nur R 3 ) Bit 0x04= Endposition Hoch programmiert / Sperre Referenzfahrt R 1 Bit 0x08= Endposition Tief programmiert / Sperre Referenzfahrt R 2 Defaultwert = 1 ( Freigabe zur Referenzfahrt Richtung Hoch ) für J8 Defaultwert = 3 ( Freigabe zur Referenzfahrt beide Richtungen ) für R3 |
| | | |
| 1X | 1Fh | SLOW ( Geschwindigkeitseinstellung Slow motion ) Geschwindigkeitswert für Slow motion in Bytevariable, Wertebereich 30 -60 in 1/10- Umdrehungen pro min ( 3 bis 6 1/min ) |
| | | |
| 2X | 20h | FAST ( Geschwindigkeitseinstellung Fast motion ) Geschwindigkeitswert für Fast motion in 2- Bytevariable, Wertebereich 200 -300 in 1/10- Umdrehungen pro min ( 20 bis 30 1/min ) |
| | | |
| 2X | 22h | PMPUP ( Rampendauer Slow- Fast ) Anzahl der Impulse für den Übergang zwischen Slow zu Fast motion nach einer Motoraktivierung ( Wertebereich 2 Byte ). |
| | | |
| 2X | 24h | PMPDWN ( Rampendauer Fast - Slow ) Anzahl der Impulse vor Erreichung einer Endposition für den Übergang zwischen Fast zu Slow motion ( Wertebereich 2 Byte ). |
| | | |
| 2X | 26h | WNK_OBEN ( Winkelwert für max. Lammellenwendung nach Oben ) Absoluter Winkelwert in 1/10 ° - Auflösung nach vollständiger Lammellenwendung durch Hochfahren. |
| | | |
| 2X | 28h | WNK_UNTEN ( Winkelwert für max. Lammellenwendung nach Unten ) Absoluter Winkelwert in 1/10 ° - Auflösung nach vollständiger Lammellenwendung durch Tieffahren. |
| | | |
| 13 | 2Ah | CHECKSUM ( Prüfsumme, nur lesbar ) (1Fh R3) Prüfsumme aus der Datenkommunikation |

Über die Diagnoseabfrage zum Motorstatus sind aktuelle Positionswerte und Funktionsdaten zu erreichen. Diese Befehlsgruppe ist über das Kommandobyte 04 nur lesbar. Beispielhafte Befehle sind:

| | | |
|---|---|---|
| 44 | 60h | POSCNT ( Aktueller Impuls- Positionswert ) Impulswert für die aktuelle Motorposition, Wertebereich 800000h - 0. |
| | | |
| 14 | 64h | MtrState (Motor- Funktionsstatus) Bitmusterbyte zur Statusanzeige des Funktionsablaufes. Bit 0x01 letzte aktive Laufrichtung 1 ( Hochfahren ) Bit 0x02 letzte aktive Laufrichtung 2 ( Abfahren ) Bit 0x04 Programmiersperre aktiv Bit 0x08 Spannungsüberwachung aktiv Bit 0x10 Motorlauf aktiv Bit 0x20 R1 aktiv Bit 0x40 R2 aktiv Bit 0x80 Reserve |
| | | |
| 14 | 65h | KLast ( aktueller letzter Tastenstatus ) Bitmuster des letzen Tastenstatus der Ortsbedienung ( nur verfügbar bei internen Interface ) Bit 0x01 = Taste Richtung 1 Bit 0x02 = Taste Richtung 2 Bit 0x04= Taste ZP |
| | | |
| 14 | 66h | CYCLEACT ( Zyklencounter automatische Referenzfahrt ) Aktueller Zyklenstand zwischen 255 - 0 zur Aktivierung einer autom. Referenzfahrt bei Ereigniseintritt = 0; Der nächstfolgende Fahrbefehl wird als Referenzfahrt ausgeführt, wenn vorher die jeweilige Endposition über eine Selbstjustierung erfolgte. |
| | | |
| 14 | 67h | REFRUN ( Referenzereignis ) Bitmuster-Statusbyte für Endpositionen und Referenzfreigabe; Bit 0x01 = Referenzfreigabe für Richtung 1 Bit 0x02= Referenzfreigabe für Richtung 2 Bit 0x04= Endposition Hoch programmiert / Sperre Referenzfahrt Bit 0x08 = Endposition Tief programmiert / Sperre Referenzfahrt |
| | | |
| 14 | 68h | DIAG ( Diagnose- Messages ) Bitmuster- Status ( H aktiv ) (Tb) |
| 14 | 60h | POSCNT ( Aktueller Impuls- Positionswert ) Impulswert für die aktuelle Motorposition, Wertebereich 800000h - 0. |
| | | |
| 14 | 64h | MtrState ( Motor- Funktionsstatus ) Bitmusterbyte zur Statusanzeige des Funktionsablaufes. Bit 0x01 letzte aktive Laufrichtung 1 ( Hochfahren ) Bit 0x02 letzte aktive Laufrichtung 2 ( Abfahren ) Bit 0x04 Programmiersperre aktiv Bit 0x08 Spannungsüberwachung aktiv Bit 0x10 Motorlauf aktiv Bit 0x20 R1 aktiv Bit 0x40 R2 aktiv Bit 0x80 Dauerphase Netz |
| | | |
| 14 | 65h | KLast ( aktueller letzter Tastenstatus ) Bitmuster des letzen Tastenstatus der Ortsbedienung ( nur verfügbar bei internen Interface ) Bit 0x01 = Taste Richtung 1 Bit 0x02 = Taste Richtung 2 |
| | | |
| 14 | 66h | CYCLEACT ( Zyklencounter automatische Referenzfahrt ) Aktueller Zyklenstand zwischen 255 - 0 zur Aktivierung einer autom. Referenzfahrt bei Ereigniseintritt = 0; Der nächstfolgende Fahrbefehl wird als Referenzfahrt ausgeführt, wenn vorher die Endposition über eine Selbstjustierung erfolgte. |
| | | |
| 14 | 67h | REFRUN ( Referenzereignis ) Bitmuster-Statusbyte für Endpositionen und Referenzfreigabe; Bit 0x01 = Referenzfreigabe für Richtung 1 Bit 0x04= Endposition Hoch programmiert / Sperre Referenzfahrt Bit 0x08 = Endposition Tief programmiert / Sperre Referenzfahrt |
| | | |
| 14 | 68h | DIAG ( Diagnose- Messages ) Bitmuster- Status ( H aktiv ) (tbd) |
| 14 | 69h | APOS% ( aktuelle prozentuale Impulsposition) Aktuelle Impulsposition zwischen den Endpositionen in prozentualer Wertangabe 0 - 200 in 0,5%- Schritten |
| | | |
| 24 | 70h | LPOS ( Akt. Lammellenwinkel ) Aktueller Lammellenwinkel in 1/10 ° ( 0 ° = waagerechte Lammellenstellung). |

### BEZUGSZEICHENLISTE

- 1: Antriebsvorrichtung
- 2: Spannungsversorgung
- 3: Stromversorgung
- 4: Anschluss

## Patentansprüche

1. Interface einer Sonnenschutz- und/oder Verdunklungssystem-Antriebsvorrichtung zur seriellen Datenkommunikation zwischen der Antriebsvorrichtung und externen Steuer- und/oder Konfigurationseinheiten, wobei das Interface Einrichtungen zur Datenkommunkation über ein 7-Byte-Telegramm aufweist.

2. Interface nach Anspruch 1, **dadurch gekennzeichnet, dass** der Telegrammaufbau 7x8 Datenbits ohne Parität und mit einem Stopbit enthält.

3. Interface nach Anspruch 1 oder 2, **dadurch gekennzeichnet, dass** der Telegrammaufbau ein Adressierbyte und wahlweise 0 - 4 Parametrierbytes zur definierten Konfigurierung von Befehlen und Kommandos aufweist.

4. Interface nach einem oder mehreren der vorhergehenden Ansprüche, **dadurch gekennzeichnet, dass** der Telegrammaufbau aus 7 Bytes besteht, wobei das 7. Byte zur Gewährleistung der Datensicherheit eine Prüfsumme aus einer Modulo256-Operation (Prüfsummenwert immer auf 0 abgeglichen) enthält.

5. Verfahren zum Betreiben eines Interface einer Sonnenschutz- und/oder Verdunklungssystem-Antriebsvorrichtung zur seriellen Datenkommunikation zwischen der Antriebsvorrichtung und externen Steuer- und/oder Konfigurationseinheiten, wobei die Datenkommunkation über ein 7-Byte-Telegramm erfolgt.

6. Verfahren nach Anspruch 5, **dadurch gekennzeichnet, dass** der Telegrammaufbau 7x8 Datenbits ohne Parität und mit einem Stopbit enthält.

7. Verfahren nach Anspruch 5 oder 6, **dadurch gekennzeichnet, dass** der Telegrammaufbau ein Adressierbyte und wahlweise 0 - 4 Parametrierbytes zur definierten Konfigurierung von Befehlen und Kommandos aufweist.

8. Interface nach einem oder mehreren der Ansprüche 5 bis 7, **dadurch gekennzeichnet, dass** der Telegrammaufbau aus 7 Bytes besteht, wobei das 7. Byte zur Gewährleistung der Datensicherheit eine Prüfsumme aus einer Modulo256-Operation (Prüfsummenwert immer auf 0 abgeglichen) enthält.
